# EUROPÄISCHE PATENTSCHRIFT

(11) **EP 1 634 906 B1**
(45) Veröffentlichungstag und Bekanntmachung des Hinweises auf die Patenterteilung: **06.08.2014**
(21) Anmeldenummer: 05018877.0
(22) Anmeldetag: 31.08.2005
(51) Int. Cl.: C08G 18/81, C09D 175/14

(54) **Herstellung von neuen strahlenhärtenden Bindemitteln**
Preparation of radiation curable binders
Préparation de liants photodurcissables

(30) Priorität: 09.09.2004 DE 102004043537
(43) Veröffentlichungstag der Anmeldung: 15.03.2006
(73) Patentinhaber: Allnex IP S.à.r.l., 1660 Luxembourg (LU)
(72) Erfinder: Weikard, Jan, Dr., 51519 Odenthal (DE); Gürtler, Christoph, Dr., 50676 Köln (DE); Fischer, Wolfgang, Dr., 40668 Meerbusch (DE); Schmitz, Jörg, Dr., 51065 Köln (DE); Mundstock, Holger, 42929 Wermelskirchen (DE)
(74) Vertreter: Destryker, Elise Martine

(56) Entgegenhaltungen:
- EP-A- 1 334 987
- WO-A-02/00754
- DE-A- 10 041 634
- DATABASE WPI Week 200374 Derwent Publications Ltd., London, GB; AN 2003-782662 XP002359796 "Energy-beam curable resin composition" & JP 2003 048927 A (DAINIPPON INK&CHEM) 21. Februar 2003 (2003-02-21)

## Beschreibung

Die vorliegende Erfindung betrifft ein Verfahren zur Herstellung neuartiger Bindemittel, die unter Einwirkung aktinischer Strahlung mit ethylenisch ungesättigten Verbindungen unter Polymerisation reagierende Gruppen und gegebenenfalls auch gegenüber Isocyanaten reaktive Gruppen aufweisen sowie deren Verwendung in Beschichtungsmitteln.

Die Härtung von aktivierten Doppelbindungen tragenden Beschichtungssystemen durch aktinische Strahlung, wie z. B. UV-Licht, IR-Strahlung oder auch Elektronenstrahlung ist bekannt und technisch etabliert. Es ist eine der schnellsten Härtungsmethoden in der Beschichtungstechnologie. Auf diesem Prinzip basierende Beschichtungsmittel werden daher als strahlen- oder aktinisch-härtende bzw. härtbare Systeme bezeichnet.

Besonders vorteilhafte Eigenschaften können erzielt werden, wenn die Strahlenhärtung mit einem davon unabhängig steuerbaren zweiten Vernetzungsschritt kombiniert wird. Derartige Beschichtungssysteme werden als Dual-Cure-Systeme bezeichnet (z.B. Macromol. Symp. 187, 531-542, 2002, definiert auf S. 534).

Bedingt durch die ökologischen und ökonomischen Anforderungen an moderne Lacksysteme möglichst wenig oder gar kein organisches Lösungsmittel zur Viskositätseinstellung zu verwenden, besteht der Wunsch, bereits niedrigviskose Lackrohstoffe zu verwenden. Bekannt hierfür sind seit langem Polyisocyanate mit Allophanatstruktur wie sie u. a. in EP-A 0 682 012 beschrieben werden.

In der Technik werden diese durch Umsetzung eines ein- oder mehrwertigen Alkohols mit überschüssigem aliphatischen und/oder cycloaliphatischen Diisocyanat hergestellt (vgl. GB-A 994 890, EP-A 0 000 194 oder EP-A 0 712 840). Anschließend erfolgt die Entfernung nicht reagierten Diisocyanats mittels Abdestillation im Vakuum. Nach DE-A 198 60 041 kann diese Verfahrensweise auch mit OH-ftmktionellen Verbindungen mit aktivierten Doppelbindungen, wie z.B. Hydroxyalkylacrylaten, durchgeführt werden, wobei jedoch zur Herstellung besonders monomerenarmer Produkte Schwierigkeiten auftreten. Da der Destillationsschritt bei Temperaturen bis zu 135°C verlaufen muss, um den Rest-Isocyanatgehalt ausreichend senken zu können (< 0,5 Gew.-% Restmonomer), können während der Aufreinigung bereits Doppelbindungen thermisch initiiert unter Polymerisation reagieren, so dass keine einwandfreien Produkte mehr erhalten werden.

EP-A 0 825 211 beschreibt ein Verfahren zum Aufbau von Allophanatstrukturen aus Oxadiazintrionen, wobei allerdings keine strahlenhärtenden Derivate mit aktivierten Doppelbindungen bekannt sind. Lediglich die Verwendung von Maleinat- und/oder Fumarat-haltigen Polyestern wird erwähnt, die Möglichkeit der Strahlenhärtung wird nicht beschrieben.

US 5 777 024 beschreibt die Herstellung der niedrigviskosen strahlenhärtenden Allophanaten durch eine Reaktion von Hydroxy-funktionellen Monomeren, die aktivierte Doppelbindungen tragen, mit NCO-gruppenhatigen, allophanatmodifizierten Isocyanuraten.

Die Bildung von Allophanat-Verbindungen durch Ringöffnung von Uretdionen mit Alkoholen ist als Vernetzungsmechanismus in Pulverlacken bekannt (vgl. Proceedings of the International Waterborne, High-Solids, and Powder Coatings Symposium 2001, 28th, 405-419, sowie US-A 2003 0153 713). Allerdings sind die dazu nötigen Reaktionstemperaturen für die gezielte Herstellung von strahlenhärtenden Monomeren auf Allophanatbasis mit aktivierten Doppelbindungen zu hoch (> 130°C).

Historisch wurde die direkte Reaktion von Uretdion-Ringen mit Alkoholen zu Allophanaten erstmals für lösemittelhaltige Isocyanat-freie 2K-Polyurethan-Lacke untersucht. Unkatalysiert ist diese Reaktion aufgrund der geringen Reaktionsgeschwindigkeit ohne technische Bedeutung (F. Schmitt, Angew. Makromol. Chem. (1989), 171, S. 21-38). Mit geeigneten Katalysatoren soll die Vemetzungsreaktion zwischen Hexamethylendüsocyanat(HDI)-basierten Uretdionhärtern und Polyolen aber schon bei 60-80°C einsetzen (K. B. Chandalia; R. A Englebach; S. L.Goldstein; R. W. Good; S. H. Harris; M. J. Morgan; P. J. Whitman; R. T. Wojcik, Proceedings of the International Waterborne, High-Solids, and Powder Coatings Symposium, (2001), S. 77-89). Die Struktur dieser Katalysatoren wurde bisher nicht veröffentlicht. Kommerzielle Produkte, zu deren Herstellung diese Reaktion genutzt wird, sind bisher auch nicht bekannt.

Zusammenfassend lässt sich festhalten, dass die Herstellung von niedrigviskosen strahlenhärtenden Allophanaten mit gegenüber Isocyanaten reaktiven Gruppen durch eine ringöffnende Umsetzung von Alkoholen, die aktivierte Doppelbindungen tragen, mit Uretdionen bei Temperaturen ≤ 130°C aus dem Stand der Technik her nicht explizit beschrieben wird.

Überraschenderweise wurde nun gefunden, dass aus der Umsetzung von Uretdionen mit olefinisch ungesättigten Alkoholen, die bevorzugt aktivierte Doppelbindungen enthalten, und gesättigten Verbindungen mit wenigstens zwei gegenüber Isocyanaten reaktiven Gruppen unter Einsatz von Ammonium- oder Phosphoniumsalzen aliphatischer Carbonsäuren als Katalysatoren bereits bei Temperaturen ≤ 130°C niedrigviskose strahlenhärtende Allophanate mit niedrigen Restmonomeranteilen erhalten werden können. Weisen solche sowohl Vernetzer nicht nur strahlenhärtende sondern auch gegenüber NCO-Gruppen reaktive Funktionen auf, werden diese als Dual-Cure-Vernetzer bezeichnet.

Gegenstand der Erfmdung ist daher ein Verfahren zur Herstellung allophanatgruppenhaltiger Bindemittel, die unter Einwirkung aktinischer Strahlung mit ethylenisch ungesättigten Verbindungen unter Polymerisation reagierende Gruppen (strahlenhärtende Gruppen) und gegebenenfalls NCO-reaktive Gruppen aufweisen, bei dem bei Temperaturen ≤ 130°C
A) eine oder mehrere uretdiongruppenhaltige und NCO-funktionelle Verbindungen zunächst mit
B) einer oder mehreren Verbindungen, die gegenüber Isocyanaten reaktive Gruppen und unter Einwirkung aktinischer Strahlung mit ethylenisch ungesättigten Verbindungen unter Polymerisation reagierende Gruppen (strahlenhärtende Gruppen) aufweisen, und dann
C) mit einer oder mehreren von B) verschiedenen gesättigten hydroxylgruppenhaltigen Verbindungen, wobei wenigstens eine dieser Verbindungen eine OH-Funktionalität von ≥ 2 aufweist,
D) in Anwesenheit einer oder mehrerer Ammonium- oder Phosphoniumsalze aliphatischer oder cycloaliphatischer Carbonsäuren als Katalysator und
E) optional Hilfs- und Zusatzstoffen
umgesetzt werden, wobei die Umsetzung mit Verbindungen C) zumindest anteilig unter Bildung von Allophanatgruppen verläuft.

Darüber hinaus sind die nach dem erfindungsgemäßen Verfahren erhältlichen Bindemittel ein Gegenstand der Erfindung.

Im Rahmen der vorliegenden Erfindungen werden die Begriffe "strahlenhärtende Gruppen", "aktinisch härtende Gruppen" und "unter Einwirkung aktinischer Strahlung mit ethylenisch ungesättigten Verbindungen unter Polymerisation reagierende Gruppen" synonym verwendet.

Unter Einwirkung aktinischer Strahlung mit ethylenisch ungesättigten Verbindungen unter Polymerisation reagierende Gruppen sind beispielsweise Vinyl-, Vinylether-, Propenyl-, Allyl-, Maleinyl-, Fumaryl-, Maleinimid-, Dicyclopentadienyl-, Acrylamid-, Acryl- und Methacryl-Gruppen wobei bevorzugt aktivierte Gruppen dieser Art wie Vinylether-, Acrylat- und/oder Methacrylat-Gruppen, besonders bevorzugt Acrylatgruppen in den Verbindungen der Komponente B) zum Einsatz kommen.

Unter NCO-reaktiven Gruppen werden OH-, SH- und NH-funktionelle Verbindungen verstanden, bevorzugt Hydroxyl-, primäre oder sekundäre Aminogruppen sowie Asparaginatgruppen. Besonders bevorzugt sind Hydroxylgruppen.

In Komponente A) können alle organischen Verbindungen eingesetzt werden, die mindestens eine Uretdion und eine NCO-Gruppe aufweisen.

Bevorzugt weisen die in A) eingesetzten Verbindungen einen Gehalt an Uretdiongruppen (berechnet als C₂N₂O₂ = 84 g/mol) von 3 bis 60 Gew.-%, besonders bevorzugt von 10 bis 50 Gew.-%, ganz besonders bevorzugt von 25 bis 40 Gew.-% auf.

Bevorzugt weisen die in A) eingesetzten Verbindungen gleichzeitig zu dem vorstehend genannten Uretdiongruppengehalt auch von 3 bis 60 Gew.-%, besonders bevorzugt von 10 bis 50 Gew.-%, insbesondere von 15 bis 25 Gew.-% an NCO-Gruppen (berechnet als NCO = 42 g/mol) auf.

Derartige Verbindungen werden üblicherweise durch katalytische Dimerisierung von aliphatischen, cycloaliphatischen, aromatischen und/oder araliphatischen Di- oder Polyisocyanaten nach an sich bekannten Verfahren hergestellt (vgl. J. Prakt. Chem. 1994, 336, Seite 196-198).

Geeignete Diisocyanate sind beispielsweise 1,4-Diisocyanatobutan, 1,6-Diisocyanatohexan, Trimethylhexandiisocyanat, 1,3- und 1,4-bis-Isocyanatomethylcyclohexan, Isophorondiisocyanat (IPDI), 4,4'-Diisocyanatodicyclohexylmethane, 1,3- und 1,4-Xylylendiisocyanate (XDI Handelsprodukt der Fa. Takeda, Japan), Diphenylmethan-4,4'-diisocyanat und Diphenylmethan-2,4'-diisocyanat (MDI), 2,4- und 2,6-Toluendiisocyanat (TDI), oder ihre Mischungen. Im Sinne der Erfindung ist die Verwendung von 1,6-Diisocyanatohexan, Isophorondiisocyanat und/oder deren Mischungen bevorzugt.

Als Katalysatoren kommen dabei z.B.: Trialkylphosphine, Dimethylaminopyridine, Tris-(dimethylamino)-phosphin zum Einsatz.

Das Ergebnis der Dimerisierungsreaktion hängt in dem Fachmann bekannter Weise von dem verwendeten Katalysator, den Verfahrensbedingungen sowie den eingesetzten Diisocyanaten ab. Insbesondere können Produkte entstehen die im Mittel mehr als eine Uretdiongruppe pro Molekül aufweisen, wobei die Anzahl der Urediongruppen einer Verteilung unterliegt. In Abhängigkeit von dem verwendeten Katalysator, den Verfahrensbedingungen sowie den eingesetzten Diisocyanaten entstehen auch Produktgemische, die neben Uretdionen auch andere Struktureinheiten aufweisen wie z.B. Isocyanurat und/oder Iminooxadiazindion.

Besonders bevorzugte Produkte sind durch katalytische Dimerisierung von HDI erhältlich und weisen einen Gehalt an freien HDI von unter 0,5 Gew.-%, einen NCO-Gehalt von 17 bis 25 Gew.-%, bevorzugt von 21 bis 24 Gew.-% und eine Viskosität bei 23°C von 20 bis 500 mPas, bevorzugt von 50 bis 200 mPas auf.

Die durch katalytische Dimerisierung erhältlichen in der Regel NCO-funktionellen Verbindungen werden bevorzugt direkt als Teil von Komponente A) eingesetzt, sie können aber grundsätzlich auch zunächst noch weiter umgesetzt werden und dann erst in A) verwendet werden. Dies kann beispielsweise eine Blockierung der freien NCO-Gruppen oder die weitere Umsetzung von NCO-Gruppen mit NCO-reaktiven zwei- oder mehrfachfunktionellen Verbindungen zu Iminooxadiazindion-, Isocyanurat-, Urethan-, Allophanat-, Biuret- Harnstoff-, Oxadiazintrion-, Oxazolidinon-, Acylharnstoff oder Carbodiimid-Strukturen sein. Dabei werden uretdiongruppenhaltige Verbindungen mit erhöhtem Molekulargewicht erhalten, die abhängig von der gewählten Verhältnissen unterschiedliche Gehalte an NCO-Gruppen aufweisen.

Beispielsweise geeignete Blockierungsmittel sind Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin, Cyclopentanoncarboxyethylester oder beliebige Gemische dieser Blockierungsmittel. Die Verfahrensweise zur Blockierung von NCO-Gruppen ist dem Fachmann vertraut und exemplarisch in Progress in Organic Coatings 1999, 36, 148-172 beschrieben.

NCO-reaktive zwei- oder mehrfachfunktionelle Verbindungen zur Derivatisierung der in A) eingesetzten Uretdione können die oben genannten Di- und/oder Polyisocyanate sein, weiterhin einfache zwei- oder mehrfunktionelle Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Geeignete dreiwertige Alkohole sind Glycerin oder Trimethylolpropan oder deren alkoxylierte Derivate. Vierwertige Alkohole sind Pentaerythrit oder dessen alkoxylierte Derivate.

Ferner können auch hydrophilierend wirkenden Verbindungen mit mindestens einer isocyanatreaktiven Gruppe einzeln oder als Mischung zur Derivatisierung eingesetzt werden. Hydrophilierend wirkende Verbindungen werden bevorzugt dann eingesetzt, wenn das erfindungsgemäße Verfahrensprodukt in Wasser oder wasserhaltigen Mischungen gelöst oder dispergiert werden soll.

Unter hydrophilierend wirkenden Verbindungen werden alle ionisch, potentiell ionisch und nicht ionisch hydrophilierenden Verbindungen mit mindestens einer gegenüber Isocyanaten reaktiven Gruppe verstanden. Diese Verbindungen weisen als isocyanatreaktive Gruppen bevorzugt Hydroxy- und/oder Aminofunktionen auf.

Als ionisch oder potentiell ionisch hydrophilierende Verbindungen werden bevorzugt Verbindungen eingesetzt, die mindestens eine isocyanatreaktive Gruppe sowie mindestens eine Funktionalität, wie z.B. ―COOY, -SO₃Y, -PO(OY)₂ (Y = H, NH₄⁺, Metallkation), -NR₂, -NR₃⁺, -PR₃⁺ (R = H, Alkyl, Aryl), aufweisen. Unter potentiell ionisch hydrophilierend werden solche Verbindungen verstanden, die bei Wechselwirkung mit wässrigen Medien ein ggf. pH-Wert-abhängiges Dissoziationsgleichgewicht eingehen und auf diese Weise negativ, positiv oder neutral geladen sind.

Geeignete ionisch oder potentiell ionisch hydrophilierende Verbindungen sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendianün-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyl-diethanolamin als hydrophile Aufbaukomponenten. Bevorzugte ionisch oder potentielle ionisch hydrophilierende Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Als hydrophile nichtionische Verbindungen können Verbindungen mit Polyetherstruktur, bevorzugt Alkylenoxid-basierende Polyether eingesetzt, die mindestens eine Hydroxy- oder Aminogruppe als isocyanatreaktive Gruppe enthalten.

Diese Verbindungen mit Polyetherstruktur können beispielsweise einwertige, im statistischen Mittel 5 bis 70, bevorzugt 7 bis 55 Ethylenoxideinheiten pro Molekül aufweisende Polyalkylenoxidpolyetheralkohole mit mindestens 30 mol-% Ethylenoxid sein, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S.31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge getrennt voneinander oder im Gemisch bei der Alkoxylierungsreaktion eingesetzt werden können, so dass Block- oder Mischpolyether erhalten werden.

Bevorzugt handelt es sich bei den Verbindungen mit Polyetherstruktur um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen.

Ganz besonders bevorzugt sind monofunktionelle gemischte Polyalkylenoxidpolyether, die mindestens 40 mol-% Ethylenoxid- und maximal 60 mol% Propylenoxideinheiten aufweisen.

Insbesondere bei der Verwendung eines ionische Gruppen enthaltenden Hydrophilierungsmittel muss sein Einfluss auf die Wirkung des Katalysators D) überprüft werden. Aus diesem Grund sind, wenn die Polyisocyanate überhaupt hydrophiliert werden sollen, nichtionische Hydrophilierungsmittel bevorzugt.

Beispielsweise geeignete Verbindungen der Komponente B), die alleine oder in Mischung eingesetzt werden können, sind 2-Hydroxyethyl(meth)acrylat, Polyethylenoxid-mono(meth)acrylat (z.B. PEA6 / PEM6; Laporte Performance Chemicals Ltd., UK), Polypropylenoxidmono(meth)acrylat (z.B. PPA6, PPM5S; Laporte Performance Chemicals Ltd., UK), Polyalkylenoxidmono-(meth)acrylat (z.B. PEM63P, Laporte Performance Chemicals Ltd., UK), Poly(ε-caprolacton)-mono(meth)acrylate wie z.B. (Tone M100®; Dow, Schwalbach, DE), 2-Hydroxypropyl-(meth)acrylat, 4-Hydroxybutyl(meth)acrylat, 3-Hydroxy-2,2-dimethylpropyl(meth)acrylat, die hydroxyfunktionellen Mono-, Di- oder soweit möglich höheren Acrylate wie z.B. Glycerindi-(meth)acrylat, Trimethylolpropandi(meth)acrylat, Pentaerythrittri(meth)acrylat oder Dipentaerythritpenta(meth)acrylat, die durch Umsetzung mehrwertiger gegebenenfalls alkoxylierter Alkohole wie Trimethylolpropan, Glycerin, Pentaerythrit, Dipentaerythrit gegebenenfalls als technisch anfallende Mischung zugänglich sind.

Ebenfalls geeignet als Bestandteil von B) sind auch Alkohole, die sich aus der Umsetzung von doppelbindungshaltigen Säuren mit gegebenenfalls doppelbindungshaltigen Epoxidverbindungen erhalten werden, so z.B. die Umsetzungsprodukte von (Meth)acrylsäure mit Glycidyl(meth)acrylat oder Bisphenol-A-diglycidylether.

Darüber hinaus können ebenfalls ungesättigte Alkohole eingesetzt werden, die aus der Umsetzung von gegebenenfalls ungesättigten Säureanhydriden mit gegebenenfalls acrylatgruppenhaltigen Hydroxy- und Epoxidverbindungen erhalten werden. Beispielsweise sind dies die Umsetzungsprodukte von Maleinsäureanhydrid mit 2-Hydroxyethyl(meth)acrylat und Glycidyl(meth)acrylat.

Besonders bevorzugte Verbindungen der Komponente B) sind 2-Hydroxyethylacrylat, 2-Hydroxypropylacrylat, 4-Hydroxybutylacrylat, Tone M100® (Dow, Schwalbach, DE), Polyethylenoxidmono(meth)acrylat (z.B. PEA6 / PEM6; Laporte Performance Chemicals Ltd., UK), Polypropylenoxidmono(meth)acrylat (z.B. PPA6, PPM5S; Laporte Performance Chemicals Ltd., UK) sowie die Umsetzungsprodukte von Acrylsäure mit Glycidylmethacrylat.

Komponente C) enthält eine oder mehrere von B) verschiedene gesättigte hydroxylgruppenhaltige Verbindungen, wobei mindestens eine dieser Verbindungen eine OH-Funktionalität von ≥ 2 aufweist. Die Verbindungen können monomer und/oder polymer sein.

Geeignet sind niedermolekulare Mono-, Di- oder Polyole wie kurzkettige, d.h. 2 bis 20 Kohlenstoffatome enthaltende, aliphatische, araliphatische oder cycloaliphatische Monoalkohole, Diole oder Polyole. Beispiele für Monoalkohole sind Methanol, Ethanol, die isomeren Propanole, Butanole, Pentanole, weiterhin Diacetonalkohol, Fettalkohole oder fluorierte Alkohole wie sie z.B. unter dem Namen Zonyl® von der Firma DuPont erhältlich sind. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Beispiele geeigneter Triole sind Trimethylolethan, Trimethylolpropan oder Glycerin. Beispiele geeigneter Polyole sind Ditrimethylolpropan, Pentaerythrit, Dipentaerythrit und Sorbit. Bevorzugt sind die Alkohole 1,4-Butandiol, 1,4-Cyclohexandimethanol, 1,6-Hexandiol und Trimethylolpropan.

Geeignet sind auch höhermolekulare Polyole wie Polyesterpolyole, Polyetherpolyole, hydroxyfunktionelle (Meth)Acrylat(co)polymerisate, hydroxyfunktionelle Polyurethane oder entsprechende Hybride (vgl. Römpp Lexikon Chemie, S.465-466, 10. Aufl. 1998, Georg-Thieme-Verlag, Stuttgart).

Bei der Herstellung der hydroxyfunktionellen Polyester können insbesondere 6 Gruppen von Monomerbestandteilen zur Anwendung kommen:
1. ((Cyclo)Alkandiole wie zweiwertige Alkohole mit (cyclo)aliphatisch gebundenen Hydroxylgruppen wie die bereits zuvor als niedermolekulare Diole erwähnten Verbindungen, weiterhin Polyethylen-, Polypropylen- oder Polybutylenglykole mit einem Molekulargewicht von 200 bis 4000, bevorzugt 300 bis 2000, besonders bevorzugt 450 bis 1200. Umsetzungsprodukte der zuvor genannten Diole mit ε-Caprolacton oder anderen Lactonen können ebenfalls als Diole zum Einsatz gelangen.
2. Drei- und höherwertige Alkohole des Molekulargewichtsbereichs 92 bis 254, wie z.B. Glycerin, Trimethylolpropan, Pentaerythrit, Dipentaerythrit und Sorbit, auf diesen Alkoholen gestartete Polyether wie z.B. das Umsetzungsprodukt von 1 mol Trimethylolpropan mit 4 mol Ethylenoxid, oder durch Umsetzung mit mit ε-Caprolacton oder anderen Lactonen gewonnene Alkohole.
3. Monoalkohole wie z. B. Ethanol, 1- und 2-Propanol, 1- und 2-Butanol, 1- Hexanol, 2-Ethylhexanol, Cyclohexanol und Benzylalkohol.
4. Dicarbonsäuren des Molekulargewichtsbereichs 104 bis 600 und/oder deren Anhydride, wie z.B. Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimerfettsäuren.
5. Höherfunktionelle Carbonsäuren bzw. deren Anhydride wie z.B. Trimellithsäure und Trimellithsäureanhydrid.
6. Monocarbonsäuren, wie z.B. Benzoesäure, Cyclohexancarbonsäure, 2-Ethylhexansäure, Capronsäure, Caprylsäure, Caprinsäure, Laurinsäure, natürliche und synthetische Fettsäuren.

Geeignete hydroxylgruppenhaltige Polyester enthalten das Umsetzungsprodukt von mindestens einem Bestandteil aus Gruppe 1 oder 2 mit mindestens einem Bestandteil aus Gruppe 4 oder 5. Alternativ können auch die oben beschriebenen Umsetzungsprodukte von Alkoholen mit Lactonen verwendet werden. Die hydroxylgruppenhaltige Polyester weisen zahlenmittlere Molekulargewicht von 500 bis 10000, bevorzugt 800 bis 3000 g/mol und einen Gehalt an Hydroxylgruppen von 1 bis 20, bevorzugt 3 bis 15 Gew.-% auf. Die Polyester können in Substanz oder in für das erfindungsgemäße Verfahren geeigneten, unten beschriebenen Lösemitteln oder Reaktivverdünnern gelöst zum Einsatz kommen.

Neben den beschriebenen Polyesterpolyolen eignen sich auch dendrimere oder hyperverzweigte Verbindungen wie sie beispielsweise aus ethoxiliertem Pentaerythrit und Dimethylolpropionsäure erhältlich sind.

Geeignete Polycarbonatpolyole sind beispielsweise durch Umsetzung der zuvor bei den Polyesterpolyolen genannten Alkohlen mit organischen Carbonaten wie z.B. Diphenyl-, Dimethyl- oder Diethylcarbonat nach bekannten Methoden erhältlich. Sie weisen üblicherweise zahlenmittlere Molekulargewichte von 500 bis 5000, bevorzugt von 750 bis 2500 g/mol und Hydroxylfunktionalitäten von 1,5 bis 3 auf

Geeignete Polyether sind beispielsweise solche, die auf den oben genannten niedermolekulare Mono-, Di- oder Polyolen gestartete Alkylenoxid-Polyether. Weiterhin durch Polymerisation von Tetrahydrofuran erhältliche Polyether. Die Polyether weisen zahlenmittlere Molekulargewichte von 400 bis 13000, bevorzugt 400 bis 2500, insbesondere 500 bis 1200 g/mol und einen Gehalt an Hydroxylgruppen von 1 bis 25, bevorzugt 3 bis 15 Gew.-% auf.

(Meth)acrylat(co)polymerisate sind in der WO 03/000812 auf den Seiten 8 bis 16 ausführlich beschrieben und auf geeignete Herstellverfahren wird verwiesen, wobei erfindungsgemäß nur solche (Meth)acrylat(co)polymerisate geeignet sind, die mindestens eine Hydroxylgruppe aufweisen. Die (Meth)acrylat(co)polymerisate weisen bevorzugt zahlenmittlere Molekulargewichte von 500 bis 10000, insbesondere von 1000 bis 5000 und einen Gehalt an Hydroxylgruppen von 1 bis 20, insbesondere 3 bis 15 Gew.-% auf.

Besonders bevorzugt sind monomere Di- oder Triole, sowie davon abgeleitete Polyether und/oder Polylactone eines mittleren Molekuargewichts unter 1000 g/mol.

Als Verbindungen der Katalysatorkomponente D) können neben den erfindungsgemäß zu verwendenden Ammonium- oder Phosphoniumsalzen aliphatischer Carbonsäuren als Katalysatoren grundsätzlich auch die dem Fachmann an sich bekannten Verbindungen zur Katalyse der Reaktion von Isocyanatgruppen mit isocyanatreaktiven Gruppen einzeln oder in beliebigen Mischungen untereinander verwendet werden.

Beispielhaft sind hier tert. Amine wie Triethylamin, Pyridin, Methylpyridin, Benzyl-dimethylamin, N,N-Endoethylenpiperazin, N-Methyl-piperidin, Pentamethyldiethy-len-triamin, N,N-Dimethylaminocyclohexan, N,N'-Dimethyl-piperazin, 1,4-Diazabicyclo[2.2.2]octan (DABCO) oder Metallsalze wie Eisen(III)-chlorid, Zinn(II)-octoat, Zinn(II)-ethyl-caproat, Zinn(II)-palmitat, Dibutylzinn(IV)-dilaurat, Dibutylzinn(IV)-diacetat und Molybdänglykolat oder beliebige Gemische solcher Katalysatoren zunennen.

Als Ammonium- oder Phosphoniumsalze aliphatischer oder cycloaliphatischer Carbonsäuren der Komponente D) werden bevorzugt tetrasubstituerte Verbindungen der allgemeinen Formel (II) eingesetzt, 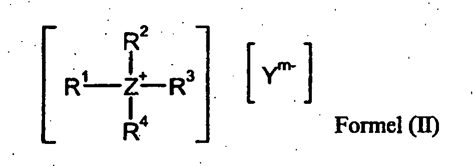 in welcher
- Z: für Stickstoff oder Phosphor steht,
- R¹, R², R³, R⁴: unabhängig voneinander Wasserstoff oder gleiche oder verschiedene aliphatische, cycloaliphatische oder araliphatische Reste mit bis zu 24 Kohlenstoffatomen sind und
- Y: ein Carboxylatrest der allgemeinen Formel (III) ist, 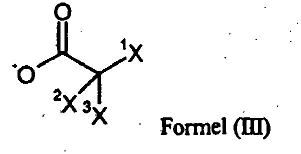 in welcher
- ¹X, ²X, ³X: unabhängig voneinander Substituenten ausgewählt aus der Gruppe bestehend aus Wasserstoff, Halogen, Cyano-, Hydroxy-, Amid-, Ether-, Ester-, Thioether-, Keton-, Aldehyd- und Carboxylatgruppe sowie aliphatische oder cycloaliphatische Reste mit bis zu 24 Köhlenstoffatomen sind, die gegebenenfalls Teile cyclischer oder polycyclischer Systeme sind.

Als tetrasubstituerte Ammonium- oder Phosphoniumsalze aliphatischer oder cycloaliphatischer Carbonsäuren der Formel (II) werden besonders bevorzugt Tetraalkylammoniumcarboxylate, die bevorzugt auf aliphatischen. Carbonsäuren mit verzweigten Alkylresten ohne weitere funktionelle Gruppen basieren, eingesetzt.

Ganz besonders bevorzugt sind Tetrabutylammonium-2-ethylhexanoat, Tetrabutylammonium-pivalat, Cholin-2-ethylhexanoat, Cholin-pivalat, Methylcholin-2-ethylhexanoat und/oder Methylcholin-pivalat, deren Herstellung in US 5,691,440 beschrieben ist.

In einer bevorzugten Ausführungsform der Erfindung werden in D) ausschließlich Carboxylate der vorstehend genannten Art als einzige Verbindung der Komponente D) verwendet.

Es ist auch möglich die Katalysatoren D) nach dem Fachmann bekannten Methoden auf Trägermaterialien zu bringen und als heterogene Katalysatoren zu verwenden.

Die Verbindungen der Katalysatorkomponente D) können vorteilhafterweise in einer der im Verfahren beteiligten Komponenten oder einem Teil davon gelöst werden. Insbesondere lösen sich die erfindungsgemäß einzusetzenden Carboxylate sehr gut in den polaren Hydroxyalkylacrylaten, so dass D) gelöst in kleinen Mengen von B) als konzentrierte Lösung flüssig dosiert werden kann.

Im erfindungsgemäßen Verfahren wird die Katalysatorkomponente D) typischerweise in Mengen von 0,001 bis 5,0 Gew.-%, bevorzugt 0,01 bis 2,0 Gew.-% und besonders bevorzugt 0,05 bis 1,0 Gew.-% bezogen auf Festgehalt des Verfahrensprodukts eingesetzt.

Als Bestandteile der Komponente E) können im erfindungsgemäßen Verfahren beispielsweise Lösemittel oder Reaktivverdünner eingesetzt werden.

Geeignete Lösemittel sind gegenüber den vorhandenen funktionellen Gruppen des Verfahrensprodukts vom Zeitpunkt der Zugabe bis zum Ende des Verfahrens inert. Geeignet sind z.B. in der Lacktechnik verwendete Lösemittel wie Kohlenwasserstoffe, Ketone und Ester, z.B. Toluol, Xylol, Isooctan, Aceton, Butanon, Methylisobutylketon, Ethylacetat, Butylacetat, Tetrahydrofuran, N-Methylpyrrolidon, Dimethylacetamid, Dimethylformamid, wobei jedoch bevorzugt kein Lösungsmittel zugesetzt wird.

Als Reaktivverdünner können Verbindungen mitverwendet werden, die bei der UV-Härtung ebenfalls (co)polymerisieren und somit in das Polymernetzwerk mit einbauen. Werden diese schon mit den NCO-Gruppen-haltigen Verbindungen A) in Kontakt gebracht, so müssen sie gegenüber NCO-Gruppen inert sein. Werden sie erst nach der Umsetzung A) mit B) zugegeben, so gilt diese Einschränkung nicht. Reaktivverdünner sind beispielhaft in P. K. T. Oldring (Ed.), Chemistry & Technology of UV & EB Formulations For Coatings, Inks & Paints, Vol. 2, 1991, SITA Technology, London, S. 237 - 285 exemplarisch beschrieben. Dies können Ester der Acrylsäure oder Methacrylsäure, bevorzugt der Acrylsäure mit mono- oder mehrfachfunktionellen Alkoholen sein. Als Alkohole eignen sich beispielsweise die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatischer Alkohole wie Phenoxyethanol und Nonylphenylethanol, sowie Tetrahydrofurfurylalkohole. Weiterhin können alkoxylierte Derivate dieser Alkohole verwendet werden. Geeignete zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Geeignete dreiwertige Alkohole sind Glycerin oder Trimethylolpropan oder deren alkoxylierte Derivate. Vierwertige Alkohole sind Pentaerythrit oder dessen alkoxylierte Derivate.

Die erfindungsgemäßen Bindemittel müssen gegen vorzeitige Polymerisation stabilisiert werden. Daher gibt man als Bestandteil von Komponente E) vor und/oder während der Reaktion bevorzugt phenolische Stabilisatoren zu, die die Polymerisation inhibieren. Verwendet werden dabei Phenole wie para-Methoxyphenol, 2,5-Di-tert.-Butylhydrochinon oder 2,6-Di-tert.-butyl-4-methylphenol. Geeignet sind auch N-Oxyl-Verbindungen zur Stabilisierung wie z.B. 2,2,6,6-Tetramethylpiperidin-N-Oxid (TEMPO) oder seine Derivate. Ebenso können die Stabilisatoren auch chemisch mit in das Bindemittel eingebaut werden, dabei eignen sich Verbindungen der oben genannten Klassen insbesondere wenn sie noch weitere freie aliphatische Alkoholgruppen oder primäre oder sekundäre Amingruppen tragen und damit über Urethan- oder Harnstoff-Gruppen chemisch an Verbindungen der Komponente A) gebunden werden können. Hierfür besonders geeignet sind 2,2,6,6-Tetramethyl-4-hydroxy-piperidin-N-Oxid. Bevorzugt sind phenolische Stabilisatoren insbesondere para-Methoxyphenol und/oder 2,6-Di-tert.-butyl-4-methylphenol.

Andere Stabilisatoren wie z. B. Verbindungen der Klasse der HALS (HALS = hindered amine light stabilizers) werden dagegen weniger bevorzugt in E) eingesetzt, da sie bekanntermaßen keine so effektive Stabilisierung zu ermöglichen und vielmehr zu einer "schleichenden" radikalischen Polymerisation ungesättigter Gruppen führen können.

Zur Stabilisierung der Reaktionsmischung, insbesondere der ungesättigten Gruppen gegen vorzeitige Polymerisation, kann ein sauerstoffhaltiges Gas, bevorzugt Luft, in und/oder über das Reaktionsgemisch geleitet werden. Es ist bevorzugt, dass das Gas einen möglichst geringen Anteil an Feuchtigkeit besitzt, um unerwünschte Reaktion bei Vorhandensein von Isocyanat zu verhindern.

In der Regel wird während der Herstellung der erfindungsgemäßen Bindemittel ein Stabilisator zugesetzt und abschließend um eine Langzeitstabilität zu erreichen nochmals mit einem phenolischen Stabilisator nachstabilisiert und ggf. mit Luft das Reaktionsprodukt gesättigt.

Im erfindungsgemäßen Verfahren wird die Stabilisatorkomponente typischerweise in Mengen von 0,001 bis 5,0 Gew.-%, bevorzugt 0,01 bis 2,0 Gew.-% und besonders bevorzugt 0,05 bis 1,0 Gew.-% bezogen auf Festgehalt des Verfahrensprodukts eingesetzt.

Das erfindungsgemäße Verfahren wird in der Reihenfolge durchgeführt, dass zunächst A) mit B) bis zum vollständigem Umsatz der NCO-Gruppen durchgeführt wird. Das entstehende Zwischenprodukt kann gegebenenfalls gelagert und/oder transportiert werden. Es schließt sich dann die Umsetzung der Uretdiongruppen mit der Komponente C) an.

Das Verhältnis von NCO-Gruppen in A) und NCO-reaktiven Gruppen in B) beträgt von 1:1 bis 1:1,5, bevorzugt 1:1 bis 1:1,2, insbesondere 1:1. Das Verhältnis von Uretdiongruppen in A) zu Hydroxylgruppen in C) beträgt 1:0,4 bis 1:6, bevorzugt 1:0,9 bis 1:4, insbesondere 1:0,9 bis 1:2. Wesentlich ist zusätzlich, dass die Summe der NCO-Gruppen und Uretdiongruppen in A) die der mit NCO-Gruppen- und Uretdiongruppen-reaktiven Gruppen in B) übersteigt.

Je nach den gewählten Verhältnissen werden Verfahrensprodukte erhalten, die entweder frei sind von Hydroxylgruppen oder noch Hydroxylgruppen enthalten. Bevorzugt weisen diese neben den strahlenhärtenen Gruppen auch NCO-reaktive Funktionen auf.

Das erfindungsgemäße Verfahren wird bevorzugt bei Temperaturen von 20 bis 130°C, besonders bevorzugt von 40 bis 90°C durchgeführt.

Die Viskosität der erfindungsgemäß erhältlichen Bindemittel hängt insbesondere von Funktionalität, Molekulargewicht und chemischer Natur der verwendeten Komponente C) sowie von den verwendeten stöchiometrischen Verhältnissen ab. Werden beispielsweise die bevorzugten monomere Di- oder Triole, sowie davon abgeleitete Polyether und/oder Polylactone eines mittleren Molekulargewichts unter 1000 g/mol verwendet, so resultieren bevorzugt Bindemittel einer Viskosität unter 100.000 mPa s bei 23 °C, insbesondere unter 75.000 mPa s bei 23 °C.

Das zahlenmittlere Molekulargewicht liegt bevorzugt zwischen 500 und 5000, insbesondere zwischen 800 und 2000 g/mol.

Es ist unerheblich, ob das erfindungsgemäßen Verfahren kontinuierlich z.B. in einem StatikMischer oder diskontinuierlich z.B. in einem Rührreaktor durchgeführt wird.

Bevorzugt wird das erfindungsgemäße Verfahren in einem Rührreaktor, wobei die Reihefolge der Zugabe der Komponenten A) und B) im ersten Verfahrensschritt und des Zwischenprodukts AB) und C) im zweiten Verfahrensschritt beliebig ist. Die Zugabe der in E) enthaltenen Stabilisatoren erfolgt bevorzugt bevor die Komponente B) einer thermischen Belastung ausgesetzt wird. Die anderen Teile der Komponente E) können zu einem beliebigen Zeitpunkt zugegeben werden. Die Zinkverbindungen von D) werden bevorzugt erst nach Herstellung des Zwischenprodukts AB) zugefügt.

Der Verlauf der Reaktion kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des Brechungsindex, des OH-Gehalts, Gaschromatographie (GC), kernmagnetische Resonanzspektroskopie (NMR), Infrarotspektroskopie (IR) und Nahinfrarotspektroskopie (NIR). Bevorzugt ist die IR-Kontrolle auf ggf. vorhandene freie NCO Gruppen (für aliphatische NCO-Gruppen, Bande bei ca. ν = 2272 cm⁻¹) sowie insbesondere auf Uretdiongruppen (z.B. Bande für Uretdione auf Basis Hexamethylendiisocyanat bei ν = 1761 cm⁻¹) und GC-Untersuchungen auf nicht umgesetzte Verbindungen aus B) und C). Es ist möglich die Umsetzung der Uretdiongruppen mit den Hydroxylgruppen nicht vollständig durchzuführen, sondern bei Erreichen eines bestimmten Umsatz abzubrechen. Eine weitere (schleichende) Reaktion kann dann durch Zusatz von sauren Agenzien, wie sie beispielsweise für die Stabilisierung von Isocyanatgruppen dem Fachmann bekannt sind, unterbunden werden. Insbesondere kommen in Betracht Säuren oder Säurederivate, z.B. Benzoylchlorid, Phthaloylchlorid, phosphinige, phosphonige und/oder phosphorige Säure, Phosphin-, Phosphon- und/oder Phosphorsäure sowie die sauren Ester der letztgenannten 6 Säuretypen, Schwefelsäure und ihre sauren Ester und/oder Sulfonsäuren.

Die erfindungsgemäßen Bindemittel können zur Herstellung von Beschichtungen und Lacken sowie Klebstoffen, Druckfarben, Gießharzen, Dentalmassen, Schlichten, Photoresisten, Stereolithographiesystemen, Harzen für Verbundwerkstoffe und Dichtungsmassen verwendet werden. Im Falle der Verklebung oder Abdichtung ist allerdings Voraussetzung, dass bei UV-Stahlenhärtung mindestens eines der beiden zu verklebenden oder miteinander abzudichtenden Substrate für UV-Strahlung durchlässig, also i. d. R. transparent sein muss. Bei der Elektronenstrahlung ist auf eine hinreichende Durchlässigkeit für Elektronen zu achten. Bevorzugt ist die Verwendung in Lacken und Beschichtungen.

Ein weiterer Gegenstand der Erfindung sind Beschichtungsmittel enthaltend
a) ein oder mehrere erfindungsgemäß erhältliche Bindemittel,
b) gegebenenfalls ein oder mehrere Polyisocyanate mit freien oder blockierten Isocyanatgruppen, die gegebenenfalls unter Einwirkung aktinischer Strahlung mit ethylenisch ungesättigten Verbindungen unter Polymerisation reagierenden Gruppen enthalten,
c) gegebenenfalls weitere von denen aus a) verschiedene Verbindungen, die unter Einwirkung aktinischer Strahlung mit ethylenisch ungesättigten Verbindungen unter Polymerisation reagierende Gruppen und gegebenenfalls mit NCO-Gruppen reaktive Gruppen aufweisen,
d) gegebenenfalls ein oder mehrere mit Isocyanaten reagierende, aktiven Wasserstoff enthaltende Verbindungen, die frei sind von unter Einwirkung aktinischer Strahlung mit ethylenisch ungesättigten Verbindungen unter Polymerisation reagierenden Gruppen
e) Initiatoren,
f) gegebenenfalls Hilfs- und Zusatzstoffe.

Polyisocyanate b) sind aromatische, araliphatische, aliphatische oder cycloaliphatische Di- oder Polyisocyanate. Es können auch Mischungen solcher Di- oder Polyisocyanate eingesetzt werden. Beispiele geeigneter Di- oder Polyisocyanate sind Butylendiisocyanat, Hexamethylendiisocyanat (HDI), Isophorondiisocyanat (IPDI), 2,2,4- und/oder 2,4,4-Trimethylhexamethylendiisocyanat, die isomeren Bis(4,4`-isocyanatocyclohexyl)methane oder deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4`- oder 4,4'-Diphenylmethandiisocyanat, Triphenylmethan-4,4',4"-triisocyanat oder deren Derivate mit Urethan-, Hamstoff-, Carbodiimid-, Acylharnstoff , Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren von überschüssigem Diisocyanat befreit wurden, insbesondere die des Hexamethylendiisocyanat, Isophorondiisocyanat und der isomeren Bis(4,4'-isocyanatocyclohexyl)methane sowie deren Mischungen. Besonders bevorzugt sind die oligomeren Isocyanurate und Iminooxadiazindione des HDI und deren Mischungen sowie die oligomeren Isocyanurate des IPDI.

Es ist gegebenenfalls auch möglich, die vorgenannten Isocyanate mit dem Fachmann aus der Beschichtungstechnologie bekannten Verbindungen blockiert einzusetzen. Als Beispiel für Blockierungsmittel seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin, Cyclopentanoncarboxyethylester oder beliebige Gemische dieser Blockierungsmittel.

Die Polyisocyanate b) können gegebenenfalls eine oder mehrere funktionelle Gruppen enthalten, die unter Einwirkung aktinischer Strahlung mit ethylenisch ungesättigten Verbindungen unter Polymerisation reagieren. Diese Gruppen können durch Reaktion der unter B) genannten ungesättigten und isocyanatreaktiven Verbindungen einschließlich der Vorzugsbereiche mit gesättigten Polyisocyanaten nach an sich bekannten Methoden hergestellt werden. Soleche NCO-haltigen Urethanacrylate sind kommerziell bei Bayer AG, Leverkusen, DE als Roskydal® UA VP LS 2337, Roskydal® UA VP LS 2396 oder Roskydal® UA XP 2510 erhältlich.

Als Verbindungen der Komponente c) können Polymere wie Polyacrylate, Polyurethane, Polysiloxane, Polyester, Polycarbonate, Polyether, die Gruppen enthalten, die durch Einwirkung aktinischer Strahlung mit ethylenisch ungesättigten Verbindungen unter Polymerisation reagieren, eingesetzt werden. Solche Gruppen sind α,β-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen. Bevorzugt sind Acrylate und Methacrylate. Beispiele beinhalten die in der Technologie der Strahlenhärtung bekannten und unter E) exemplarisch beschriebenen Reaktivverdünner (vgl. Römpp Lexikon Chemie, S.491, 10. Aufl. 1998, Georg-Thieme-Verlag, Stuttgart) oder die in der Technologie der Strahlenhärtung bekannten Bindemittel wie Polyetheracrylate, Polyesteracrylate, Urethanacrylate, Epoxyacrylate, Melaminacrylate, Silikonacrylate, Polycarbonatacrylate und acrylierte Polyacrylate, die gegebenfalls Isocyanat-reaktive Gruppen insbesondere Hydroxylgruppen aufweisen.

Geeignete Verbindungen d) sind beispielsweise die unter C) beschrieben hydroxyfunktionellen monomeren oder polymeren Verbindungen zusätzlich auch Wasser, das gegebenenfalls auch in Form von Luftfeuchtigkeit erst nach dem Beschichten mit den übrigen Bestandteilen in Kontakt gebracht wird. Weiterhin können NH-funktionelle Verbindungen wie Amin-terminierte Polyether, Polyamine und Asparaginate verwendet werden.

Als Initiatoren der Komponente e) für eine radikalische Polymerisation können durch Strahlung und/oder thermisch aktivierbare Initiatoren zum Einsatz kommen. Fotoinitiatoren, die durch UV-oder sichtbares Licht aktiviert werden, sind hierbei bevorzugt. Fotoinitiatoren sind an sich bekannte, kommerziell vertriebene Verbindungen, wobei zwischen unimolekularen (Typ I) und bimolekularen (Typ II) Initiatoren unterschieden wird. Geeignete (Typ I)-Systeme sind aromatische Ketonverbindungen, z.B. Benzophenone in Kombination mit tertiären Aminen, Alkylbenzophenone, 4,4`-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyldiphenylphosphinoxid, Bisacylphosphinoxide, Phenylglyoxylsäureester, Campherchinon, α -Aminoalkylphenone, α,α-Dialkoxyacetophenone und α-Hydroxyalkylphenone.

Die Initiatoren, die in Mengen zwischen 0,1 und 10 Gew.-%, vorzugsweise 0,1 bis 5 Gew.-%, bezogen auf das Gewicht des Lackbindemittels, eingesetzt werden, können als einzelne Substanz oder, wegen häufiger vorteilhafter synergistischer Effekte, auch in Kombination miteinander verwendet werden.

Werden Elektronenstrahlen statt UV-Strahlung verwendet, so benötigt man keinen Photoinitiator. Elektronenstrahlung wird wie dem Fachmann bekannt ist, mittels thermischer Emission erzeugt und über eine Potentialdifferenz beschleunigt. Die energiereichen Elektronen schlagen dann durch eine Titanfolie und werden auf die zu härtenden Bindemittel gelenkt. Die allgemeinen Prinzipien der Elektronenstrahlhärtung sind in "Chemistry & Technology of UV & EB Formulations for Coatings, Inks & Paints", Vol. 1, P K T Oldring (Ed.), SITA Technology, London, England, S. 101-157, 1991 im Detail beschrieben.

Im Falle einer thermischen Härtung der aktivierten Doppelbindungen, kann diese auch unter Zusatz von thermisch zerfallenden Radikalbildnern erfolgen. Geeignet sind, wie dem Fachmann bekannt ist, z.B. Peroxyverbindungen wie Dialkoxydicarbonate wie z.B. Bis(4-tert-butylcyclohexyl)peroxydicarbonat, Dialkylperoxide wie z.B. Dilaurylperoxid, Perester aromatischer oder aliphatischer Säuren wie z.B. tert.-Butylperbenzoat oder tert.-Amylperoxy 2-ethylhexanoat, anorganische Peroxide wie z. B. Ammoniumperoxodisulfat, Kaliumperoxodisulfat, organische Peroxide wie z.B. 2,2-Bis(tert.-butylperoxy)butan, Dicumylperoxid, tert.-Butylhydroperoxid oder auch Azoverbindungen wie 2,2'-Azobis[N-(2-propenyl)-2-methylpropionamide], 1-[(cyano-1-methylethyl)azo]formamide, 2,2'-Azobis(N-butyl-2-methylpropionamide), 2,2'-Azobis(N-cyclohexyl-2-methylpropionamide), 2,2'-Azobis{2-methyl-N-[2-(1-hydroxybutyl)]propionamide}, 2,2'-Azobis-{2-methyl-N-[2-(1-hydroxybutyl)]propionamide, 2,2'-Azobis{2-methyl-N-[1,1-bis(hydroxymethyl)-2-hydroxyethyl] propionamide. Möglich sind auch hochsubstituierte 1,2-Diphenylethane (Benzpinakole), wie z. B. 3,4-Dimethyl-3,4-diphenylhexan, 1,1,2,2-Tetraphenyl-ethandiol-1,2 oder auch deren silylierten Derivate.

Es ist auch möglich eine Kombination von durch UV-Licht und thermisch aktivierbaren Initiatoren zu verwenden.

Zu den Hilfs- und Zusatzstoffen der Komponente f) gehören Lösemittel der vorstehend unter E) genannten Art.

Des Weiteren können in f) zur Erhöhung der Wetterstabilität der gehärteten Lackschicht auch UV-Absorber und/oder HALS-Stabilisatoren enthalten sein. Bevorzugt ist die Kombination. Erstere sollten einen Absorptionsbereich von maximal 390 nm haben wie Triphenyltriazintypen (z.B. Tinuvin® 400 (Ciba Spezialitätenchemie GmbH, Lampertheim, DE)), Benztriazole wie Tinuvin® 622 (Ciba Spezialitätenchemie GmbH, Lampertheim, DE) oder Oxalsäuredianilide (z. B. Sanduvor® 3206 (Clariant, Muttenz, CH))) und werden in 0,5 bis 3,5 Gew.-% bezogen auf Festharz zugegeben. Geeignete HALS-Stabilisatoren sind kommerziell erhältlich (Tinuvin® 292 oder Tinuvin® 123 (Ciba Spezialitätenchemie GmbH, Lampertheim, DE) oder Sanduvor® 3258 (Clariant, Muttenz, CH). Bevorzugte Mengen sind 0,5 bis 2,5 Gew.-% bezogen auf Festharz.

Ebenfalls können in f) Pigmente, Farbstoffe, Füllstoffe, Verlaufs- und Entlüftungsadditive enthalten sein.

Darüber hinaus können, sofern erforderlich die aus der Polyurethanchemie bekannten Katalysatoren zur Beschleunigung der NCO/OH-Reaktion in f) enthalten sein. Dies sind z.B. Zinn- oder Zinksalze oder Zinnorganoverbindungen, Zinn- und/oder Zinkseifen wie z.B. Zinnoctoat, Dibutylzinndilaurat, Dibutylzinnoxid, tertiäre Amine wie z. B. Diazabicyclo[2,2,2]octan (DABCO), Wismuth-, Zirkon- oder Molybdänverbindungen.

Das Auftragen der erfindungsgemäßen Beschichtungsmittel auf das zu beschichtende Material erfolgt mit den in der Beschichtungstechnologie üblichen und bekannten Methoden wie Spritzen, Rakeln, Walzen, Gießen, Tauchen, Schleudern, Streichen oder Sprühen oder durch Druck-Techniken wie Sieb-, Tief-, Flexo- oder Offsetdruck sowie durch Transfer-Methoden.

Geeignete Substrate sind beispielsweise Holz, Metall, insbesondere auch Metall wie es in den Anwendungen der sogenannten Draht-, Coil-, Can- oder Container-Lackierung verwendet wird, weiterhin Kunststoff auch in Form von Folien, insbesondere ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, und UP (Kurzbezeichnungen nach DIN 7728T1), Papier, Leder, Textilien, Filz, Glas, Holz, Holzwerkstoffe, Kork, anorganisch gebundene Substrate wie Holz- und Faserzementplatten, elektronische Baugruppen oder mineralische Untergründe. Es können auch Substrate, die aus verschiedenen der vorgenannten Materialien bestehen, oder bereits beschichtete Substrate wie Fahrzeuge, Flugzeuge oder Schiffe sowie deren Teile, insbesondere Karosserien oder Anbauteile lackiert werden. Es ist auch möglich die Beschichtungsmittel nur temporär auf ein Substrat aufzubringen, dann teilweise oder vollständig zu härten und gegebenenfalls wieder abzulösen, um z.B. Folien herzustellen.

Zur Aushärtung können durch Ablüften z.B. enthaltene Lösemittel ganz oder teilweise entfernt werden.

Anschließend oder gleichzeitig können der oder die ggf. notwendigen thermischen und die photochemischen Aushärtungsprozesse nacheinander oder gleichzeitig durchgeführt werden.

Falls notwendig kann die thermische Härtung bei Raumtemperatur aber auch bei erhöhter Temperatur, vorzugsweise bei 40 bis 160°C, bevorzugte bei 60 bis 130°C, besonders bevorzugte bei 80 bis 110°C erfolgen.

Bei Verwendung von Photoinitiatoren in e) erfolgt die Strahlungshärtung bevorzugt durch Einwirkung energiereicher Strahlung, also UV-Strahlung oder Tageslicht, z.B. Licht der Wellenlänge 200 bis 700 nm. Als Strahlungsquellen für Licht oder UV-Licht dienen beispielsweise Hoch- oder Mitteldruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls möglich. Die Strahler können bauartbedingt oder durch Einsatz spezieller Filter und/oder Reflektoren so ausgestattet sein, das der Austritt eines Teils des UV-Spektrums verhindert wird. Beispielsweise kann z.B. aus arbeitshygienischen Gründen die dem UV-C oder UV-C und UV-B zugeordnete Strahlung herausgefiltert werden. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z. B. unter InertgasAtmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise zu variieren.

Besonders bevorzugt werden zur Härtung Quecksilberhochdruckstrahler in ortsfesten Anlagen eingesetzt. Fotoinitiatoren werden dann in Konzentrationen von 0,1 bis 10 Gew.-%, besonders bevorzugt 0,2 bis 3,0 Gew.-% bezogen auf den Festkörper der Beschichtung eingesetzt. Zur Härtung dieser Beschichtungen wird bevorzugt eine Dosis von 200 bis 3000 mJ/cm² gemessen im Wellenlängebereich von 200 bis 600 nm verwendet.

Bei Verwendung von thermisch aktivierbaren Initiatoren in d) durch Erhöhung der Temperatur. Die thermische Energie kann dabei durch Strahlung, Wärmeleitung und/oder Konvektion in die Beschichtung eingebracht werden, wobei üblicherweise die in der Beschichtungstechnologie gebräuchlichen Infrarot-Strahler, Nahinfrarotstrahler und/oder Öfen zum Einsatz kommen.

Die applizierten Schichtdicken (vor der Härtung) liegen typischerweise zwischen 0,5 und 5000 µm, bevorzugt zwischen 5 und 1000 µm, besonders bevorzugt zwischen 15 und 200 µm. Bei Verwendung von Lösungsmitteln wird dieses nach der Applikation und vor der Härtung durch die gängigen Methoden entfernt.

### Beispiele

Alle Prozentangaben beziehen sich sofern nicht abweichend angegeben auf Gewichtsprozent.

Die Bestimmung der NCO-Gehalte in % wurde über Rücktitration mit 0,1 mol/l Salzsäure nach Reaktion mit Butylamin vorgenommen, Grundlage DIN EN ISO 11909.

Die Viskositätsmessungen wurden mit einem Kegelplatte Viskosimeter (SM-KP), Viskolab LC3/ISO der Fa. Paar Physica, Ostfildern, DE nach ISO/DIS 3219:1990 durchgeführt.

Infrarot-Spektroskopie wurde an zwischen Natriumchloridplatten aufgetragenen Flüssigkeitsfilmen an einem Gerät Modell 157 von Perkin Elmer, Überlingen, DE.

Gehalt an Restmonomeren bzw. flüchtiger Aufbaukomponenten wurde mittels GC (Methode mit Tetradekan als internem Standard, Ofentemperatur 110°C, Injektortemperatur 150°C, Trägergas Helium, Gerät: 6890 N, Agilent, Waldbronn, DE, Säule: Restek RT 50, 30 m, 0,32 mm Innendurchmesser, Filmdicke 0,25 µm) analysiert.

Die Bestimmung des Festkörpers erfolgte nach DIN 53216/1 Entwurf 4/89, ISO 3251

Die zur Zeit der Versuchsdurchführung herrschende Umgebungstemperatur von 23°C wird als RT bezeichnet.

Desmodur® N 3400: HDI-Polyisocyanat vorwiegend enthaltend Uretdionstruktur, Viskosität 185 mPas/23°C, NCO-Gehalt 21,4 %, Handelsprodukt der Bayer AG, Leverkusen, DE

Desmorapid® Z: Dibutylzinndilaurat (DBTL), Handelsprodukt der Bayer AG, Leverkusen, DE

Darocur® 1173: Photoinitiator, Handelsprodukt der Ciba Spezialitätenchemie GmbH, Lampertheim, DE

Beispiel 1 beschreibt die Herstellung eines geeigneten katalytisch aktiven Carboxylats, das in den erfindungsgemäßen Beispielen 3 bis 4 eingesetzt wird. Beispiel 2 beschreibt die Herstellung eines Uretdiongruppen haltigen Urethanacrylats durch Urethanisierung, welches in den Beispielen 3 bis 4 eingesetzt wird.

### Beispiel 1: Cholin-2-ethylhexanoat

In einem Glaskolben mit Rückflußkühler, beheizbarem Ölbad, mechanischem Rührer und Innenthermometer wurden bei RT 272,13 g einer 40-%igen Lösung von Cholinhydroxid und 145,73 g 2-Ethylhexansäure 30 min intensiv gerührt. Am Rotationsverdampfer wurden Wasser und Methanol unter nach und nach auf 20 mbar verstärktem Vakuum bei 30-45°C abdestilliert. Das Produkt wurde dann mit n-Hexan aufgenommen und erneut am Rotationsverdampfer eingeengt und bei 0,1 mbar und 40°C 2 h getrocknet. Man erhält eine leicht gefärbte, viskose Flüssigkeit, deren 1H-NMR-Spektrum equimolare Verhältnisse von Cholin und Ethylhexanoat, aber nur ein schwaches Signal im Bereich aliphatischer Carbonsäuren aufweist.

### Beispiel 2: Uretdiongruppen haltiges Urethanacrylat

In einem Dreihalskolben mit Rückflusskühler, Rührer, Tropftrichter und Luftdurchleitung (0,5 l/h) wurden 194,90 g Desmodur^{□} N3400, 0,31 g 2,6-Di-tert.-butyl-4-methylphenol und 0,005 g Desmorapid® Z bei RT vorgelegt und dann auf 60°C erhitzt. 116,00 g 2-Hydroxyethylacrylat wurden langsam zugetropft, wobei eine maximale Temperatur von 70°C erreicht wurde. Danach wurde das Reaktionsgemisch bei 70°C gehalten, bis der NCO-Gehalt < 0,1 %. Beim Abkühlen erstarrte das Produkt zu einem wachsartigen Feststoff.

### Beispiel 3: Erfindungsgemäßes allophanathaltiges Bindemittel

In einer Apparatur analog dem Beispiel 2 wurden 70,2 g des dort erhaltenen Urethanacrylats bei 80°C aufgeschmolzen und mit 20,0 g Butylacetat, 9,6 g eines im Mittel 4fach ethoxilierten, Trimethylolpropan gestarteten Polyethers (Hydroxylzahl 550, dynamische Viskosität 505 mPa·s bei 23°C) sowie 0,24 g des Katalysators aus Beispiel 1 versetzt. Das Reaktionsgemisch wurde bei 80°C gerührt, bis im IR-Spektrum bei v = 1768 cm⁻¹ nach 3,0 h nur ein sehr schwaches Signal für Uretdiongruppen nachweisbar war. Es wurde ein klares Produkt mit einer Viskosität von 5000 mPa·s/23°C bei einem Festgehalt von 81,1 % und einem NCO-Gehalt von 0 % erhalten.

### Beispiel 4: Erfindungsgemäßes allophanathaltiges Bindemittel

Beispiel 3 wurde wiederholt mit dem Unterschied, dass nur 66,9 g Urthanacrylat, aber 12,8 g des Polyethers verwendet wurden. Das Reaktionsgemisch wurde bei 80°C gerührt, bis im IR-Spektrum bei v = 1768 cm⁻¹ nach 3,5 h nur ein sehr schwaches Signal für Uretdiongruppen nachweisbar war. Im Anschluss wurden 0,08 g Isophthalsäuredichlorid eingerührt und das Reaktionsgemisch auf RT abgekühlt. Es wurde ein klares Produkt mit einer Viskosität 4550 mPa·s/23°C bei einem Festgehalt 80,8 %, einer Hydroxylzahl 33 (Theorie 35) und einem NCO-Gehalt 0 % erhalten.

### Vergleichsbeispiel 5 und 6: Versuch der Herstellung eines allophanathaltigen Bindemittels

Die in US-A 2003 301 537 13 für die Vernetzung von Pulverlacken aus Uretdiongruppen-haltigen Hartem und polymeren Hydroxylverbindungen ohne aktivierte Doppelbindungen beschriebenen Katalysatoren wurden auf Eignung überprüft:
Vergleichsbeispiel 5: Beispiel 3 wurde wiederholt mit dem Unterschied, dass anstelle des Katalysators aus Beispiel 1 jetzt gleiche molare Mengen Tetrabutylammoniumhydroxid verwendet wurden.
Vergleichsbeispiel 6: Beispiel 3 wurde wiederholt mit dem Unterschied, dass anstelle des Katalysators aus Beispiel 1 jetzt gleiche molare Mengen Tetrabutylammoniumfluorid verwendet wurden.

| (Vergleichs)-Beispiel | 3 | 5 | 6 |
|---|---|---|---|
| Reaktionszeit nach Zugabe des Katalysators | 3,0 h | 2,5 h | 2,0 h |
| Visuelle Beurteilung | Klar | Starke Trübung | Starke Trübung |
| Festgehalt [%] | 81,1 | 81,7 | 82,2 |
| Viskosität [mPa s]bei 23°C | 5000 | 12000 | 16000 |

Der Vergleich zeigt, dass die Produkte nach Vergleichsbeispiel 5 und 6 höhere Viskositäten aufweisen und aufgrund der auftretenden deutlichen Trübung als Beschichtungsmittel kaum zu verwenden sind.

### Beispiel 7: Lackformulierung und Lack

Ein Teil des Produkts aus Beispiel 3 wurde mit 3,0 % des Photoinitiators Darocur® 1173 intensiv gemischt. Mittels eines Knochen-Rakels mit einem Spalt von 90 µm wurde die Mischung als dünner Film auf eine Glasplatte aufgezogen. Nach UV-Bestrahlung (Quecksilbermitteldruckstrahler, IST Metz GmbH, Nürtingen, DE, 750 mJ/cm²) wurde ein transparente, harte und lösemittelfeste Beschichtung mit einer Pendelhärte 103 s erhalten, die sich durch 100 Doppelhübe mit einem Butylacetat getränkten Wattebausch nicht sichtbar veränderte.

## Patentansprüche

1. Verfahren zur Herstellung allophanatgruppenhaltiger Bindemittel, die unter Einwirkung aktinischer Strahlung mit ethylenisch ungesättigten Verbindungen unter Polymerisation reagierende Gruppen (strahlenhärtende Gruppen) und gegebenenfalls NCO-reaktive Gruppen aufweisen, bei dem bei Temperaturen ≤ 130°C
A) eine oder mehrere uretdiongruppenhaltige und NCO-funktionelle Verbindungen zunächst mit
B) einer oder mehreren Verbindungen, die gegenüber Isocyanaten reaktive Gruppen und unter Einwirkung aktinischer Strahlung mit ethylenisch ungesättigten Verbindungen unter Polymerisation reagierende Gruppen (strahlenhärtende Gruppen) aufweisen, und dann
C) mit einer oder mehreren von B) verschiedenen gesättigten hydroxylgruppenhaltigen Verbindungen, wobei wenigstens eine dieser Verbindungen eine OH-Funktionalität von ≥ 2 aufweist,
D) in Anwesenheit einer oder mehrerer Ammonium- oder Phosphoniumsalze aliphatischer oder cycloaliphatischer Carbonsäuren als Katalysator und
E) optional Hilfs- und Zusatzstoffen
umgesetzt werden, wobei die Umsetzung mit Verbindungen C) zumindest anteilig unter Bildung von Allophanatgruppen verläuft.

2. Verfahren zur Herstellung allophanatgruppenhaltiger Bindemittel gemäß Anspruch 1, **dadurch gekennzeichnet, dass** die uretdiongruppenhaltigen Verbindungen der Komponente A) auf Hexamethylendiisocyanat basieren.

3. Verfahren zur Herstellung allophanatgruppenhaltiger Bindemittel gemäß Anspruch 1 oder 2, **dadurch gekennzeichnet, dass** in Komponente B) 2-Hydroxyethylacrylat, 2-Hydroxypropylacrylat, 4-Hydroxybutylacrylat, Polycthylenoxid-mono(meth)acrylat, Polypropylenoxidmono(meth)acrylat und/oder die Umsetzungsprodukte von Acrylsäure mit Glycidylmethacrylat. eingesetzt werden.

4. Verfahren zur Herstellung allophanatgruppenhaltiger Bindemittel gemäß einem der Ansprüche 1 bis 3, **dadurch gekennzeichnet, dass** in Komponente C) monomere Di- oder Triole, sowie davon abgeleitete Polyether und/oder Polyacetone eines zahlenmittleren Molekulargewichts unter 1000 g/mol eingesetzt werden.

5. Verfahren zur Herstellung allophanatgruppenhaltiger Bindemittel gemäß einem der Ansprüche 1 bis 4, **dadurch gekennzeichnet, dass** in Komponente D) ausschließlich tetrasubstituierte Ammonium- oder Phosphoniumsalze aliphatischer oder cycloaliphatischer Carbonsäuren als Katalysator eingesetzt werden.

6. Verfahren zur Herstellung allophanatgruppenhaltiger Bindemittel gemäß einem der Ansprüche 1 bis 5, **dadurch gekennzeichnet, dass** in Komponente D) als Katalysator Tetrabutylammonium-2-ethylhexanoat, Tetrabutylammonium-pivalat, Cholin-2-ethylhexanoat, Cholin-pivalat, Methylcholin-2-ethylhexanoat und/oder Methylcholin-pivalat verwendet wird.

7. Verfahren zur Herstellung allophanatgruppenhaltiger Bindemittel gemäß einem der Ansprüche 1 bis 6, **dadurch gekennzeichnet, dass** die Verfahrenstemperaturen 20 bis 100°C betragen.

8. Allophanatgruppenhaltige Bindemittel mit unter Einwirkung aktinischer Strahlung mit ethylenisch ungesättigten Verbindungen unter Polymerisation reagierende Gruppen aufweisen, die nach einem Verfahren gemäß einem der Ansprüche 1 bis 7 erhältlich sind.

9. Beschichtungsmittel enthaltend
a) ein oder mehrere allophanatgruppenhaltige Bindemittel gemäß Anspruch 8,
b) gegebenenfalls ein oder mehrere Polyisocyanate mit freien oder blockierten Isocyanatgruppen, die gegebenenfalls unter Einwirkung aktinischer Strahlung mit ethylenisch ungesättigten Verbindungen unter Polymerisation reagierenden Gruppen enthalten,
c) gegebenenfalls weitere von denen aus a) verschiedene Verbindungen, die unter Einwirkung aktinischer Strahlung mit ethylenisch ungesättigten Verbindungen unter Polymerisation reagierende Gruppen und gegebenenfalls mit NCO-Gruppen reaktive Gruppen aufweisen,
d) gegebenenfalls ein oder mehrere mit Isocyanaten reagierende, aktiven Wasserstoff enthaltende Verbindungen, die frei sind von unter Einwirkung aktinischer Strahlung mit ethylenisch ungesättigten Verbindungen unter Polymerisation reagierenden Gruppen
e) Initiatoten,
f) gegebenenfalls Hilfs-und Zusatzstoffe.

10. Substrate beschichtet mit Beschichtungen erhältlich aus allophanatgruppenhaltigen Bindemitteln gemäß Anspruch 8.

## Claims

1. Process for preparing binders which contain allophanate groups and which contain groups that react with ethylenically unsaturated compounds with polymerization on exposure to actinic radiation (radiation-curing groups) and optionally NCO-reactive groups in which process at temperatures ≤ 130°C
A) one or more NCO-functional compounds containing uretdione groups are reacted first with
B) one or more compounds that contain isocyanate-reactive groups and contain groups that react with ethylenically unsaturated compounds with polymerization on exposure to actinic radiation (radiation-curing groups), and then
C) with one or more saturated, hydroxyl-containing compounds other than B), at least one of these compounds having an OH functionality of ≥ 2,
D) in the presence of one or more ammonium salts or phosphonium salts of aliphatic or cycloaliphatic carboxylic acids, as catalyst, and
E) optionally auxiliaries and additives,
the reaction with compounds C) taking place at least proportionally with formation of allophanate groups.

2. Process for preparing binders containing allophanate groups, according to Claim 1, **characterized in that** the uretdione-group-containing compounds of component A) are based on hexamethylene diisocyanate.

3. Process for preparing binders containing allophanate groups, according to Claim 1 or 2, **characterized in that** in component B) use is made of 2-hydroxyethyl acrylate, 2-hydroxypropyl acrylate, 4-hydroxybutyl acrylate, polyethylene oxide mono(meth)acrylate, polypropylene oxide mono(meth)acrylate and/or the reaction products of acrylic acid with glycidyl methacrylate.

4. Process for preparing binders containing allophanate groups, according to one of Claims 1 to 3, **characterized in that** in component C) use is made of monomeric di- or triols and also polyethers and/or polyacetones derived therefrom, having a number-average molecular weight of below 1 000 g/mol.

5. Process for preparing binders containing allophanate groups, according to one of Claims 1 to 4, **characterized in that** in component D) use is made exclusively of tetra substituted ammonium or phosphonium salts and aliphatic or cycloaliphatic carboxylic acids as catalyst.

6. Process for preparing binders containing allophanate groups, according to one of Claims 1 to 5, **characterized in that** in component D) use is made as catalyst of tetrabutylammonium 2-ethylhexanoate, tetrabutylammonium pivalate, choline 2-ethylhexanoate, choline pivalate, methylcholine 2-ethylhexanoate and/or methylcholine pivalate.

7. Process for preparing binders containing allophanate groups, according to one of Claims 1 to 6, **characterized in that** the process temperatures are 20 to 100°C.

8. Binders containing allophanate groups, having groups which react with ethylenically unsaturated compounds with polymerization on exposure to actinic radiation, which are obtainable by a process according to one of Claims 1 to 7.

9. Coating compositions comprising
a) one or more binders containing allophanate groups according to Claim 8,
b) optionally one or more polyisocyanates containing free or blocked isocyanate groups, which optionally contain groups which react with ethylenically unsaturated compounds with polymerization on exposure to actinic radiation,
c) optionally other compounds, different from those of a), which contain groups which react with ethylenically unsaturated compounds with polymerization on exposure to actinic radiation, and optionally contain NCO-reactive groups,
d) optionally one or more isocyanate-reactive compounds containing an active hydrogen which are free from groups which react with ethylenically unsaturated compounds with polymerization on exposure to actinic radiation,
e) initiators,
f) optionally auxiliaries and additives.

10. Substrates coated with coatings obtainable from binders containing allophanate groups, according to Claim 8.

## Revendications

1. Procédé pour la préparation de liants contenant des groupes allophanate, qui présentent des groupes réagissant avec polymérisation sous l'effet d'un rayonnement actinique avec des composés éthyléniquement insaturés (groupes durcissant sous l'effet de rayons) et le cas échéant des groupes réactifs avec NCO, dans lequel on transforme, à des températures ≤ 130°C,
A) un ou plusieurs composés contenant des groupes uretdione et à fonctionnalité NCO, d'abord avec
B) un ou plusieurs composés qui présentent des groupes réactifs par rapport à isocyanate et des groupes réagissant avec polymérisation sous l'effet d'un rayonnement actinique avec des composés éthyléniquement insaturés (groupes durcissant sous l'effet de rayons), puis
C) avec un ou plusieurs composés saturés contenant des groupes hydroxyle, différents de B), au moins un de ces composés présentant une fonctionnalité OH ≥ 2,
D) en présence d'un ou de plusieurs sels d'ammonium ou de phosphonium d'acides carboxyliques aliphatiques ou cycloaliphatiques comme catalyseur et
E) éventuellement des adjuvants et additifs,
la transformation avec les composés C) se déroulant au moins en partie avec formation de groupes allophanate.

2. Procédé pour la préparation de liants contenant des groupes allophanate selon la revendication 1, **caractérisé en ce que** les composés contenant des groupes uretdione du composant A) sont à base de diisocyanate d'hexaméthylène.

3. Procédé pour la préparation de liants contenant des groupes allophanate selon la revendication 1 ou 2, **caractérisé en ce qu'**on utilise dans le composant B) de l'acrylate de 2-hydroxyéthyle, de l'acrylate de 2-hydroxypropyle, de l'acrylate de 4-hydroxybutyle, du mono(méth)acrylate de poly(oxyde d'éthylène), du mono(méth)acrylate de poly(oxyde de propylène) et/ou les produits de transformation d'acide acrylique avec du méthacrylate de glycidyle.

4. Procédé pour la préparation de liants contenant des groupes allophanate selon l'une quelconque des revendications 1 à 3, **caractérisé en ce qu'**on utilise, dans le composant C), des diols ou des triols monomères ainsi que les polyéthers et/ou les polyacétones qui en sont dérivés présentant un poids moléculaire numérique moyen inférieur à 1000 g/mole.

5. Procédé pour la préparation de liants contenant des groupes allophanate selon l'une quelconque des revendications 1 à 4, **caractérisé en ce qu'**on utilise, dans le composant D), exclusivement des sels d'ammonium ou de phosphonium tétrasubstitués d'acides carboxyliques aliphatiques ou cycloaliphatiques comme catalyseur.

6. Procédé pour la préparation de liants contenant des groupes allophanate selon l'une quelconque des revendications 1 à 5, **caractérisé en ce qu'**on utilise, dans le composant D), comme catalyseur du 2-éthylhexanoate de tétrabutylammonium, du pivalate de tétrabutylammonium, du 2-éthylhexanoate de choline, du pivalate de choline, du 2-éthylhexanoate de méthylcholine et/ou du pivalate de méthylcholine.

7. Procédé pour la préparation de liants contenant des groupes allophanate selon l'une quelconque des revendications 1 à 6, **caractérisé en ce que** les températures de procédé sont de 20 à 100°C.

8. Liants contenant des groupes allophanate, qui présentent des groupes réagissant avec polymérisation sous l'effet d'un rayonnement actinique avec des composés éthyléniquement insaturés, qui peuvent être obtenus selon un procédé selon l'une quelconque des revendications 1 à 7.

9. Agents de revêtement, contenant
a) un ou plusieurs liants contenant des groupes allophanate selon la revendication 8,
b) le cas échéant un ou plusieurs polyisocyanates présentant des groupes isocyanate libres ou bloqués, qui contiennent le cas échéant des groupes réagissant avec polymérisation sous l'effet d'un rayonnement actinique avec des composés éthyléniquement insaturés,
c) le cas échéant d'autres composés différents de ceux de a), qui présentent des groupes réagissant avec polymérisation sous l'effet d'un rayonnement actinique avec des composés éthyléniquement insaturés et le cas échéant des groupes réactifs avec NCO,
d) le cas échéant un ou plusieurs composés contenant de l'hydrogène actif, réagissant avec des isocyanates, qui sont exempts de groupes qui réagissent avec polymérisation sous l'effet d'un rayonnement actinique avec des composés éthyléniquement insaturés,
e) des initiateurs,
f) le cas échéant des adjuvants et des additifs.

10. Substrats revêtus par des revêtements pouvant être obtenus à partir de liants contenant des groupes allophanate selon la revendication 8.
